# EUROPEAN PATENT APPLICATION

(11) **EP 3 502 027 A1**
(43) Date of publication of application: **26.06.2019**
(21) Application number: 17209941.8
(22) Date of filing: 22.12.2017
(51) Int. Cl.: B66B 1/30, B66B 5/00

(54) **MANAGEMENT OF POWER SUPPLY OF AN ELEVATOR SYSTEM**

(71) Applicant: KONE Corporation, 00330 Helsinki (FI)
(72) Inventor: ELOMAA, Niko, 00330 HELSINKI (FI); VUORENALA, Jere, 00330 HELSINKI (FI); HÄNNINEN, Ari, 00330 HELSINKI (FI)
(74) Representative: Berggren Oy, Helsinki & Oulu

(57) **Abstract**

The present invention relates to an elevator system, comprising: an elevator entity (120), a mobile robot (110), wherein in response to a detection (210) that the mobile robot (110) shall provide electrical energy to the elevator entity (120) the mobile robot (110) is configured to: receive an instruction (220) to provide electrical energy to the elevator entity (120), couple (230) to a coupling station of the elevator entity (120), and provide electrical energy (240) to the elevator entity (120) via the coupling station of the elevator entity (120). The invention also relates to a method to transfer electrical energy in an elevator environment.

## Description

### TECHNICAL FIELD

The invention concerns in general the technical field of elevator systems. More particularly, the invention concerns management of power supply of an elevator system.

### BACKGROUND

Nowadays elevator systems are heavily dependent on a supply of electricity in the system. For example, the elevator hoisting machines are electrical motors, which are operable by supplying electricity to the hoisting machine, and as a result the elevator car may be moved in an elevator shaft. Correspondingly, the machinery brakes of the elevator cars need electrical energy for operating as well as many other devices belonging to the elevator system.

In the elevator environment there may be a need to provide power to the elevator system from external sources. The reason for this kind of need may arise in various situations, for example if a power outage is faced in a building of the elevator system. In the worst case passengers of the elevators may get stuck in the elevator car because the power outage happens in a middle of a travel of the elevator car and the elevator car stops between landing floors. For that kind of situations, the elevator system may be equipped with external power storages from which the power may be obtained when needed. Moreover, in some situations serviceman may carry a power source, which may be coupled to the elevator system for supplying power, i.e. electricity, into it. As said the need for external power supply may originate in various reasons.

There is also brought out ideas to introduce robots to serve passengers in a use of elevators. For example, the robots may be arranged to roam in a building and provide the passengers an interface e.g. for providing elevator calls to the elevator system. The fundamental idea in this kind of approach is to enhance people flow in buildings and in that manner to improve utilization rate of elevators as well as to increase user satisfaction with the elevators.

Hence, the integration the robots into the elevator system provides new approaches also for supplying an electrical energy to the elevator system.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present an elevator system and a method or transferring electrical energy between entities. Another objective of the invention is that the elevator system and the method enable an improved operation of the elevator system in various situations.

The objectives of the invention are reached by an elevator system and a method as defined by the respective independent claims.

According to a first aspect, an elevator system is provided, the elevator system comprising: an elevator entity, a mobile robot, wherein in response to a detection that the mobile robot shall provide electrical energy to the elevator entity the mobile robot is configured to: receive an instruction to provide electrical energy to the elevator entity; couple to a coupling station of the elevator entity; and provide electrical energy to the elevator entity via the coupling station of the elevator entity.

The elevator system may further comprise a data center communicatively coupled to at least one of the following: elevator entity, mobile robot.

The detection may be performed by one of the following: the elevator entity, the mobile robot, the data center.

Furthermore, the detection is based on an analysis by comparing a value derived from operational data relating to the elevator system to a reference value and by setting, in accordance with a comparison between the value and the reference value, a detection to express one of the following: (i) the mobile robot shall provide the electrical energy to the elevator entity, (ii) the mobile robot shall not provide the electrical energy to the elevator entity. The value compared to the reference value may represent an electrical characteristic of a drive circuit of a hoisting machine.

The mobile robot and the coupling station of the elevator entity may comprise interfaces to interact for providing electrical energy to the elevator entity from the mobile robot. The interface between the mobile robot and the coupling station of the elevator entity may be implemented by one of the following: galvanic coupling, inductive coupling.

The electrical energy provided to the elevator entity via the coupling station of the elevator entity may be arranged to be conveyed to a hoisting machine of an elevator car. The electrical energy may be conveyable to the hoisting machine via the drive circuit of the hoisting machine. Moreover, the elevator system may further comprise a wiring arranged in a traveling cable, the wiring being dedicated to transfer the electrical energy from the coupling station residing in the elevator car to the hoisting machine. Alternatively or in addition, the elevator system may further comprise a dedicated wiring in a wire bundle arranged in a shaft, the wiring being dedicated to transfer the electrical energy from the coupling station residing in a hall to the hoisting machine.

According to a second aspect, a method for an elevator system to transfer electrical energy is provided, the elevator system comprising: an elevator entity, and a mobile robot, the method comprises: detecting that the mobile robot shall provide electrical energy to the elevator entity; generating an instruction for the mobile robot to provide electrical energy to the elevator entity, coupling the mobile robot to a coupling station of the elevator entity, and providing electrical energy to the elevator entity via the coupling station of the elevator entity.

The expression "a number of" refers herein to any positive integer starting from one, e.g. to one, two, or three.

The expression "a plurality of" refers herein to any positive integer starting from two, e.g. to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically an example of an elevator system in which the present invention may be implemented to.
Figure 2 illustrates schematically a method according to an embodiment of the invention.
Figure 3 illustrates schematically an example of a method step according to an embodiment of the invention.
Figures 4A and 4B illustrate schematically non-limiting examples of an implementation of coupling station.
Figure 5 illustrates schematically an embodiment of the mobile robot according to an embodiment of the invention.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

The present invention relates at least in part to an elevator system comprising devices and entities of an elevator residing in a location where an elevator is operated. Additionally, the elevator system according to the present invention comprises a mobile robot configured to communicate with one or more other entities belonging to the elevator system. Furthermore, the elevator system may comprise a data center configured to communicate with one or more other entities belonging to the elevator system.

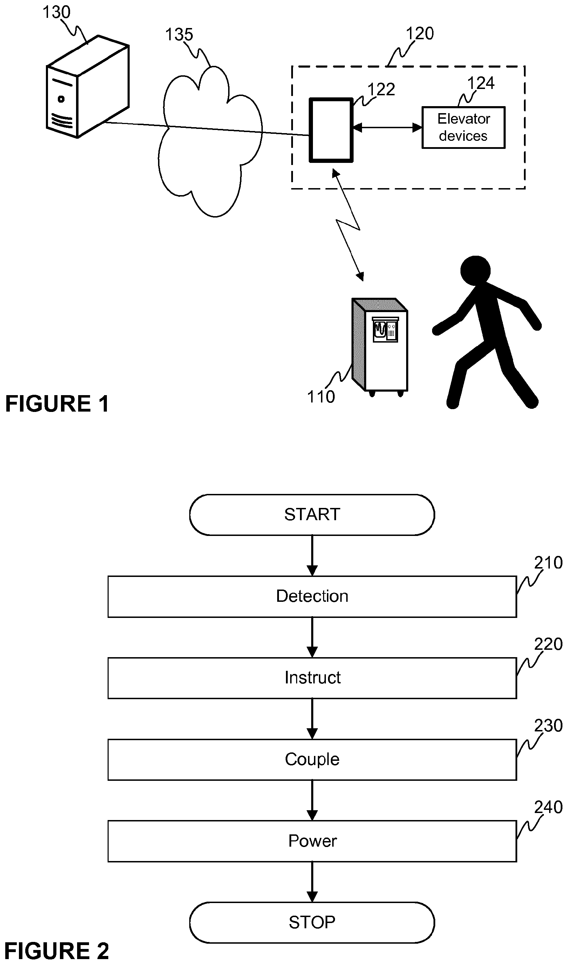

Figure 1 schematically illustrates a non-limiting example of an elevator system in which the present invention may be implemented to. The elevator system may comprise an elevator entity 120 and a mobile robot 110, which are configured to interact with each other. The interaction comprises at least communication between the entities over an applicable communication technology, but also coupling to each other for transferring electrical energy as will be described. Moreover, the elevator system may comprise a data center 130 wherein the data center 130 may be coupled to, e.g. communicatively, to at least one other entity of the elevator system. The communication between the data center 130 and the elevator entity 120 may be performed over a communication network 135, such as Internet or mobile communication network as non-limiting examples. Specifically speaking the elevator entity 120 may comprise an elevator controller 122 which may be configured to operate as an interface for other entities, like the data center 130 and the mobile robot 110. Moreover, the elevator entity 120 may comprise further devices 124, such as any necessary devices for enabling an operation of the elevator. For example, the other elevator devices 124 may comprise at least one elevator car traveling in a shaft, hoisting means for moving the elevator car, safety related devices, control related devices as well as mechanical devices needed for moving the elevator car in the shaft, for example. Moreover, the other elevator devices 124 may comprise power related devices, which refers to devices and arrangements enabling power supply to the system, for example. The above given examples of the devices belonging to the elevator entity 120 is not comprehensive, but the purpose of the description above is to give at least some understanding of the elevator entity 120 belonging to the elevator system. The relevant devices and entities as regards to the present invention will be described in more detail later.

The mobile robot 110 shall in this context be understood as a machine capable of carrying out actions automatically in response to an input provided to the robot. Moreover, in this context the robot comprises means for enabling it to be mobile within the area it operates, such as in the location of the elevator. The means for enabling the mobility may refer to power generating means, such as an electric motor receiving its power from a battery located in the robot. The battery residing in the robot may advantageously be such that its energy density is high for storing electrical energy for the purpose of the present invention. Additionally, the mobile robot 110 may comprise means of transport, such as a drive shaft and a number of tyres, or similar, into which the power is brought from the electric motor. The means for enabling the mobility as described above is a non-limiting example and any means by means of which the robot may be mobile may be applied to. Moreover, the mobile robot 110 may comprise computing resources for controlling an operation of the robot. At least part of the controlling may be received from an external control device, which in the context of the present invention may refer to the elevator controller 122 or the data center 130, or even a combination of these, or to some other entity, which may be configured to generate and transmit control signals to the mobile robot 110. Moreover, the mobile robot 110 may comprise a communication interface though which the mobile robot may be communicatively coupled to the data center 130 or to the elevator controller 122 or both. According to some embodiment the mobile robot 110 may be configured to communicate with the data center 130 through the elevator controller 122. The communication between the mobile robot 110 and the mentioned entities i.e. the data center 130 and/or the elevator controller 122 may e.g. be arranged through the communication network 135, as already mentioned. Alternatively or in addition, the mobile robot 110 may be configured to communicate with at least one of the mentioned entities locally e.g. over a short range wireless communication technology. For example, the mobile robot 110 and the elevator controller 122 may be coupled to a local Wi-Fi network and the communication may be arranged over it. Still further, the mobile robot 110 may comprise a user interface for receiving input and outputting information. For giving an example of the input given to a robot may e.g. be an indication on a need to use the elevator, i.e. giving an elevator call through the mobile robot 110, which indication may be signaled from the robot 110 to the elevator controller 122. Alternatively or in addition, the input given to a robot may indicate another type of control request towards the elevator, such as requesting to control the door of the elevator (e.g. to open or to close). Moreover, the mobile robot 110 comprises an interface for coupling it to a power supply network of the elevator entity 120 so that electrical energy may be transferred to and from the mobile robot 110. The transfer of electrical energy may be performed through a wireless power transfer or through a mechanical coupling by establishing a galvanic connection between the entities. The mechanical solution may rely on any type of plug-and-socket implementation, for example.

To describe at least some aspects of the present invention a method according to an embodiment of the invention is schematically illustrated in Figure 2. At least one aim of the present invention is to enable optimization in transfer of electrical energy between the elevator entity 120 and the mobile robot 110. Specifically, the present invention relates to a situation in which the mobile robot 110 is instructed to supply power to the elevator entity 120. In the following method steps according to the embodiment of the present invention are described:

### Regarding step 210:

Step 210 relates to a step in which a detection 210 is performed that the mobile robot 110 shall provide electrical energy to the elevator entity 120. The detection 210 may be based on a number of rules defined for performing the detection. The detection may be performed by any of the entities belonging to the system, such as by the elevator entity 120 (e.g. in the elevator controller 122 therein), by the mobile robot 110, by the data center 130, or by any combination of these. The detection may e.g. be implemented so that the entity, or entities, configured to perform the detection 210 is arranged to obtain data, such as sensor data or any other data, from the elevator system, or any external entity, and to compare the data with one or more reference values obtainable by the entity in question. If these values deviate from each other over a predetermined amount, the entity may be configured to generate in indication that a detection is made that the mobile robot 110 shall provide electrical energy stored in a battery of the mobile robot 110 to the elevator entity 120.

In an embodiment of the invention the detection may be performed by the elevator controller 122. The detection 210 may e.g. be based on a measurement, or a derivation, of a value from operational data relating to the elevator system. The value may e.g. represent an electrical characteristic of a hoisting system, such as a voltage level in a drive circuit of the hoisting machine. The elevator controller may e.g. be configured to obtain the value representing the electrical characteristic, such as a voltage level, from a measurement circuit, compare the value to a reference value and in case the measured voltage level deviates from the reference value over a predetermined amount, an indication may be generated. For example, if the elevator entity 120 experiences a power outage, it may be detected in the described manner. The elevator controller, and any other necessary entities for performing the monitoring and the detection, may be equipped with a battery for performing the detection 210, and a further communication, even if there is a power outage in the elevator entity 120.

According to another embodiment the detection may be implemented so that the entities, such as the elevator entity 120 and the mobile robot 110 are configured to communicate with each other under a predetermined communication scheme. The communication scheme may e.g. be based on time, i.e. the entities may be arranged to communicate with each other regularly or irregularly under a time scheme, for example. For example, the entities may be configured to communicate so that a first entity, such as the mobile robot 110, transmits so called polling signal to a second entity, such as to the elevator controller 122, for checking a status of the second entity, and in normal operation the second entity may respond with a predetermined status value, for example. In case, the polling entity, such as the mobile robot 110, does not receive the response, the mobile robot 110 may perform the detection 210 that it shall provide electrical energy stored in the battery of the mobile robot 110 to the elevator entity 120.

A further example of the detection 210 may be that the data center 130 may be configured to monitor an operation of the elevator entity 120. For example, it may be configured to receive data, such as operational data, from the elevator entity 120 under a predetermined communication scheme. If the data is not received the data center 130 may be configured to perform the detection 210. Alternatively or in addition, there may be arranged a polling solution between the data center 130 and the elevator entity 120 in a similar manner as described above. In case the polling is not successful the detection 210 may be performed.

In some embodiment the data center 130, or any other entity, may be configured to perform the detection 210 based on some external data. For example, the data center 130 may e.g. be configured to receive information on a market price of electricity from an external data source, and it may be configured to generate the detection 210 if the market price of the electricity exceeds a predetermined limit, and in that manner cause the mobile robot 110 to provide electrical energy to the elevator entity 120. Moreover, the detection may be based to some other specific situation, such as there is need to switch off the power supply to the elevator entity 120 from a power grid, e.g. due to a maintenance work, and obtain the electrical energy from one or more mobile robots 110. Thus, the data center 130, or any similar external entity, may be configured to, based on at least one predefined rule, decide the direction in the provision of the electrical energy i.e. if the robot provides electrical energy to the elevator system or vice versa or prevent any transfer of electrical energy. The decision-making may e.g. be based on automatic or manual monitoring, or machine-learning methods applied herein.

In the implementation in which the data center 130 may perform the detection 210 the data center 130 may be configured to generate a signal to a mobile robot 110 as will be described. The communication path may be established directly between the data center 130 and the mobile robot 110 e.g. over a mobile communication network by arranging necessary means at both ends for communication. Similarly, the communication path may be established indirectly e.g. through the elevator controller 122.

In still further embodiment the detection may be arranged so that the mobile robot 110 is configured to obtain information from an environment in which it is arranged to operate. For example, the mobile robot 110 may be configured to perform one or more measurements, e.g. with one or more sensors arranged in the mobile robot 110, in the building, or in the location, and by analyzing the measurement data, e.g. by comparing it with reference data, to determine if the detection shall be made. Alternatively or in addition, the mobile robot 110 may obtain the measurement data from measurement devices residing in the location, for example, and perform the analysis accordingly. The data obtained by the mobile robot 110 may be any other than the measurement data. As already mentioned it may be received from the data center 130

### Regarding step 220:

Next, in step 220 of Figure 2, an entity, which has performed the detection 210 that the mobile robot 110 shall provide electrical energy stored in a battery of the mobile robot 110 to the elevator entity 120, is configured to generate an instruction to the mobile robot 110 to perform accordingly. In other words, depending on the implementation the instruction may e.g. be generated by at least one of the following: the data center 130, the elevator entity 120, the mobile robot 110. In case the entity is the elevator entity 120 it may e.g. be the elevator controller 122, or any other device therein arranged to generate the instruction under certain circumstances. On the other hand, if the entity generating the instruction is the mobile robot 110 it refers to an internal logic in the mobile robot 110 as a result of which an internal instruction is generated for operating accordingly.

In the embodiment in which an external entity to the mobile robot 110, such as the data center 130 or the elevator entity 120, is configured to generate the instruction, the corresponding entity is configured to generate a signal carrying pre-defined data for indicating the mobile robot 110 that it shall provide electrical energy to the elevator entity 120. In some embodiment, the pre-defined data may be a bit indicating the need for the provision of electrical energy. In some other embodiment the pre-defined data may be a code, such as an error code, which may be interpreted by the mobile robot 110 for determining the operational instructions i.e. the mobile robot 110 shall operate so that it may provide the electrical energy to the elevator entity 120.

The mobile robot 110 may be configured to receive the instruction signal from an external entity over any communication technology the mobile robot 110 is configured to implement to. For example, the communication technology may e.g. be a mobile communication technology or Wi-Fi, for example.

### Regarding step 230:

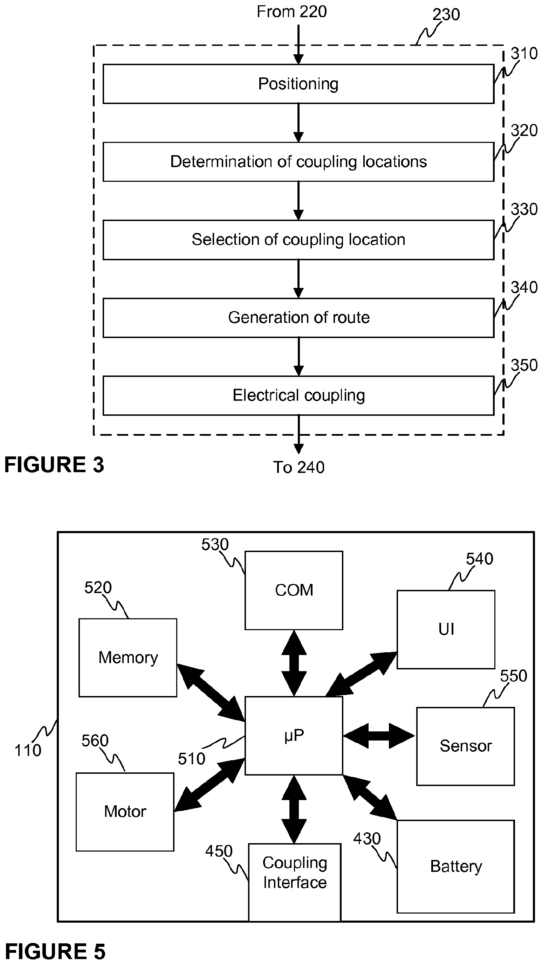

In response to a receipt of the instruction signal from an external entity, or through an internal creation of the instruction signal, the mobile robot 110 may be configured to initiate a procedure to couple to the elevator entity 120 for discharging the electrical energy thereto. A non-limiting example of the coupling step 230 is schematically illustrated in Figure 3. According to the example, the mobile robot 110 may be configured to, in response to the receipt of the instruction 220, to determine its position 310 in the location it operates to. The determination of the position 310 may be implemented with any applicable positioning technology. For example, an indoor positioning technology may be implemented in the location which is utilized by the mobile robot 110, and the position of the mobile robot 110 may be derived therefrom. Additionally, the mobile robot 110 may be configured to determine one or more locations in which it may couple to the elevator entity 120. The data indicating the locations may be stored in internal memory of the mobile robot 110 and the mobile robot 110 is configured to retrieve the information therefrom. Alternatively or in addition, the mobile robot 110 may be configured to inquiry the information from an external entity, such as from a server residing in the location and configured to provide such a functionality or even from the data center 130. In case the information is inquired from an external entity it may be arranged that only those coupling locations are informed to the mobile robot 110, which are not occupied e.g. by another mobile robot 110. This kind of implementation may be achieved by implementing a database to store up-to-date information on the statuses of the coupling locations and the information may be obtained from the database. The mobile robot 110 may be configured to execute the steps 310 and 320 concurrently, at least in part, to determine the mentioned pieces of information. Next, in response to a determination of the position and the coupling locations available for the mobile robot 110 in question the mobile robot 110 may be configured to select a coupling location 330. The selected coupling location may e.g. be the closest to the mobile robot 110 or it may be the one which is available at the time of the selection. Any further criteria may also be used for the selection. Advantageously, a limitation is defined for the coupling location to be selected that it is accessible for the mobile robot 110 in the location, such as a building, at the time the coupling is instructed. For example, the mobile robot 110 may reside in a certain floor and cannot enter to another floor e.g. due to outage of power which blocks a use of elevator in the building. Hence, only those coupling locations may be offered selectable, which reside on the same floor where the mobile robot 110 locates. The selection procedure may be implemented with a computer program product executing a selection algorithm when executed in a processing device.

Next, in the non-limiting example illustrated in Figure 3 the mobile robot 110 may be configured to generate a route 340 to the selected coupling location from its current location. For generating the route the mobile robot 110 may e.g. access to a floor plan stored in a memory and take into account any boundaries set by the floor plan in the generation of the route. The generation of the route may utilize any known route calculation algorithm, which may be applied in the described environment.

In step 350 the mobile robot 110 has reached the coupling location and is instructed exactly to such a position in the coupling location that an electrical coupling may be achieved to the elevator entity 120. At least some examples of the coupling mechanisms will be discussed later.

### Regarding step 240:

The final step according to an embodiment of the invention may be a provision of power 240, that is the electrical energy from the mobile robot 110 to the elevator entity 120 in the coupling location. The provision of power 240 may be implemented so that in response to the coupling 230 the mobile robot 110 may generate a signal causing an output of electrical energy from an energy storage residing in the mobile robot 110. For example, the signal may change a state of a switch causing the transfer of energy to the elevator entity 120.

The provision of power to the elevator entity may at least refer to an implementation that the energy is provided to at least one elevator car, such as a battery therein. Alternatively or in addition, the power may be transferred to a battery being common to a plurality of elevator cars i.e. the battery belongs to the elevator entity and is configured to provide electrical energy to the elevator cars e.g. in case of power failure.

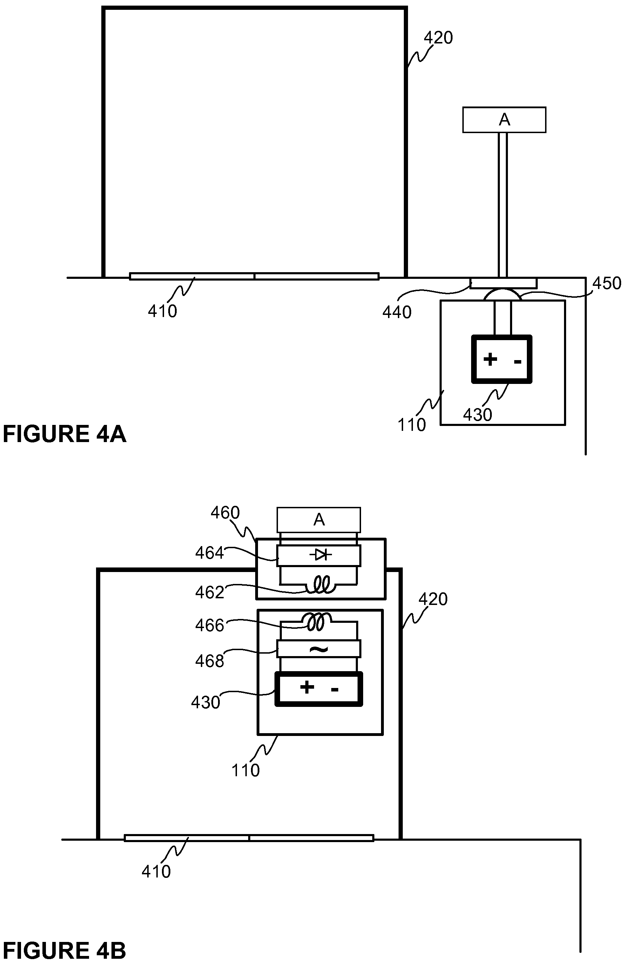

Next, some aspects of an interface between the mobile robot 110 and the elevator entity 120 are brought out with non-limiting examples as illustrated in Figures 4A and 4B. The implementation as illustrated in Figure 4A is based on a solution in which a galvanic connection may be established between the mobile robot 110 and the elevator entity 120. Here, a coupling location is in a hall close to elevator door 410 of an elevator car 420. The coupling location may comprise a coupling station comprising necessary devices and means for receiving electrical energy from a battery 430 of the mobile robot 110. Among others, the coupling station may comprise an interface 440 to which the mobile robot 110 is configured to be coupled to. Thus, the mobile robot 110 may advantageously comprise an interface 450 for establishing a galvanic connection between the interfaces 440, 450. As a result, the mobile robot 110 may provide at least a part of electrical energy stored in the battery 430 to the elevator entity 120 over the galvanic connection. The galvanic connection established with the interfaces 440, 450 is only a non-limiting example and the connection may be established in a plurality of ways. For example, a plug-and-socket type implementation may be used in which the mobile robot 110 is arranged to be driven to the coupling station so that the plug and socket get interconnected. For sake of clarity it is worthwhile to mention that the purpose of a rectangle referred with 'A' in Figure 4A is to indicate an entity into which the electrical energy received from the mobile robot 110 is supplied to.

Figure 4B, in turn, schematically illustrates an implementation according to an embodiment of the invention in which a coupling station 460 is arranged in an elevator car 420 and wherein the electrical energy is transferred over a wireless power transfer. In the disclosed embodiment the wireless power transfer is based on inductive coupling. The inductive coupling is based on an idea that the mobile robot 110 is configured to transfer the electrical energy from a battery 430 though arranging an alternating current (AC) to a transmitting coil 466. The alternating current may be generated from a DC current stored in the battery 430 by arranging an oscillator 468 to change the current to AC for supplying it to the transmitting coil 466. The coupling station 460 residing in the elevator car 420 comprises a receiving coil 462 for inducing an alternating current therein from the transmitting coil 466. Depending on an implementation the coupling station may comprise further electronics, such as a rectifier 464 for transforming the induced alternating current back to DC, for supplying the electrical energy in an applicable form to the elevator entity 120. In some embodiments, the induced AC may be directly supplied to the elevator entity 120. In the disclosed manner the mobile robot 110 may transfer energy in a wireless manner to the elevator entity e.g. in a situation in which the mobile robot 110 is traveling in the elevator car 420 when a power outage occurs in the elevator entity 120. The transfer of electrical energy to the elevator entity 120 may enable a drive of the elevator car 420 to a floor for allowing passengers to exit from the elevator car 420 in a safe manner. For sake of reason it is worthwhile to mention that the purpose of a rectangle referred with 'A' in Figure 4B is to indicate an entity into which the electrical energy received from the mobile robot 110 is supplied to, such as a battery belonging to the elevator system.

In the description herein at least some aspects of the present invention are mainly described by introducing a utilization of galvanic and inductive coupling for the power transfer. However, the invention is not limited to these only, but any applicable technology for transferring the power may be applied to. For example, resonant inductive coupling as well as magnetodynamic coupling may be used, as examples of wireless power transfer.

In the non-limiting examples as illustrated in Figures 4A and 4B it is disclosed different locations for coupling stations. It is also clear that the location of the elevator may comprise one or more charging stations e.g. on different floors and in a plurality of elevator cars 420. In Figures 4A and 4B it is illustrated entities into which the electrical energy is supplied to with rectangles referred with 'A'. The entity may advantageously be a device generating mechanical or electrical power for moving the elevator car 420 in a shaft. Naturally, the device may be any other in the elevator entity 120, which is considered to need the supplied electrical energy, or at least part of it. An example of such a device may be an elevator controller. When the device into which the electrical energy is to be supplied is a hoisting machine of the elevator car residing e.g. on top of the shaft the electrical energy may be supplied to a drive circuit controlling the hoisting machine. More specifically, the electrical energy may be supplied to an intermediate circuit of the drive circuit. The advantage of this kind of implementation is that the supplied electrical energy remains in the drive circuit and do not enter to power supply network of the whole building. The wiring through which the electrical energy is to be supplied to the drive circuit is dependent on the location of the coupling station. In case the coupling station resides in a hall it may be arranged that the electrical energy is transferred to the drive circuit over a dedicated wiring in a wire bundle e.g. arranged in the shaft. On the other hand, if the coupling station is implemented in an elevator car 420 the electrical energy may be transferred to the drive circuit through a dedicated wiring arranged in a traveling cable. In case the elevator car 420 carries the hoisting machine with it, such as a linear motor, the electrical energy may be directly fed to the device in question from the coupling station without conveying it away from the elevator car 420.

For sake of clarity it may be mentioned that devices and means belonging to the coupling station, such as the ones illustrated in Figures 4A and 4B, shall be considered to be included in the elevator devices 124 of Figure 1.

Figure 5 schematically illustrates an example of a mobile robot 110 belonging to an elevator system. The mobile robot 110 may comprise at least the following entities: processing unit 510, memory unit 520, communication unit 530, user interface (Ul) unit 540, sensor unit 550 and motor unit 560. The mentioned entities may comprise one or more operating units, e.g. one or more microprocessors or similar, one or more memories, one or more communication devices, such as modems, one or more user interface devices, one or more sensors and one or more motors. Additionally, the mobile robot 110 comprises a battery 430 for storing electrical energy and a coupling interface 450 comprising necessary elements for coupling the mobile robot 110 to a coupling station. The electrical energy stored in the battery 430 may also be used for operating the mobile robot 110 as well as to other purposes as described. The entities belonging to the mobile robot 110 may be communicatively coupled to each other with e.g. a communication bus. Additionally, the entities may be coupled to the battery 430 with a power supply network, for example. The processing unit 510 may be configured to control the operation of the mobile robot 110 as well as communication with any external entity, such as with a data center 130, an elevator entity 120, other mobile robots, or other entities. The communication may be performed e.g. in a wireless manner. The users of the elevator system may provide input through the user interface unit 540 with the mobile robot 110 and the mobile robot may, under control of the processing unit 510, output information, such as prompting, to the user. The user interface unit 540 comprises I/O devices, such as buttons, keyboard, touch screen, microphone, loudspeaker, display and so on. The sensors may comprise any sensors by means of which the mobile robot 110 may obtain information on an environment, but also the sensor unit 550 may comprise sensors enabling positioning and/or navigation within the location. The processing unit 510 may also be configured to generate control signals to the motor unit 560 in order to make the mobile robot 110 to move. Moreover, the mobile robot 110 may comprise means enabling the mobile robot 110 to be mobile, such as the transport means as described earlier. The operation of the processing unit 510 may be achieved by executing portions of computer program code stored e.g. in the memory unit 520 for generating the control signals and, thus, causing the mobile robot 110 to operate in the manner as described. The memory unit 520 may also be used for storing obtained and received information together with any other data either permanently or temporarily.

In the above some non-limiting examples with respect to the present invention are disclosed. The elevator system according to an embodiment of the invention comprises an elevator entity 120 into which electrical energy is to be supplied from at least one mobile robot 110 in response to detecting a need for that. This is advantageous because the mobile robots 110 are regularly charged e.g. from the coupling station and they can be used for discharging the electrical energy back to the elevator entity 120 if needed.

A further embodiment of the present invention may comprise a feature that in case the detection is made that at least one mobile robot 110 shall provide the electrical energy to the elevator entity, the mobile robots 110 may be arranged to communicate with each other for determining which one of the robots stores the highest level of electrical energy in a battery 430. In response to the determination the mobile robot 110 storing the highest amount of electrical energy may be instructed to couple to the coupling station for discharging the energy.

The specific examples provided in the description given above should not be construed as limiting the applicability and/or the interpretation of the appended claims. Lists and groups of examples provided in the description given above are not exhaustive unless otherwise explicitly stated.

## Claims

1. An elevator system, comprising:
an elevator entity (120),
a mobile robot (110)
wherein in response to a detection (210) that the mobile robot (110) shall provide electrical energy to the elevator entity (120) the mobile robot (110) is configured to:
receive an instruction (220) to provide electrical energy to the elevator entity (120),
couple (230) to a coupling station of the elevator entity (120), and
provide electrical energy (240) to the elevator entity (120) via the coupling station of the elevator entity (120).

2. The elevator system of claim 1, the elevator system further comprising a data center (130) communicatively coupled to at least one of the following: elevator entity (120), mobile robot (110).

3. The elevator system of any of the preceding claims, wherein the detection (210) is performed by one of the following: the elevator entity (120), the mobile robot (110), the data center (130).

4. The elevator system of any of the preceding claims, wherein the detection (210) is based on an analysis by comparing a value derived from operational data relating to the elevator system to a reference value and by setting, in accordance with a comparison between the value and the reference value, a detection to express one of the following: (i) the mobile robot (110) shall provide the electrical energy to the elevator entity (120), (ii) the mobile robot (110) shall not provide the electrical energy to the elevator entity (120).

5. The elevator system of claim 4, wherein the value compared to the reference value represents an electrical characteristic of a drive circuit of a hoisting machine.

6. The elevator system of any of the preceding claims, wherein the mobile robot (110) and the coupling station of the elevator entity (120) comprises interfaces to interact for providing electrical energy to the elevator entity (120) from the mobile robot (110).

7. The elevator system of claim 6, wherein the interface between the mobile robot (110) and the coupling station of the elevator entity (120) is implemented by one of the following: galvanic coupling, inductive coupling.

8. The elevator system of any of the preceding claims, wherein the electrical energy (240) provided to the elevator entity (120) via the coupling station of the elevator entity (120) is arranged to be conveyed to a hoisting machine of an elevator car (420).

9. The elevator system of the claim 8, wherein the electrical energy is conveyable to the hoisting machine via the drive circuit of the hoisting machine.

10. The elevator system of any of the claims 8 or 9, wherein the elevator system further comprising a wiring arranged in a traveling cable, the wiring being dedicated to transfer the electrical energy from the coupling station residing in the elevator car (420) to the hoisting machine.

11. The elevator system of any of the claims 8 or 9, wherein the elevator system further comprising a dedicated wiring in a wire bundle arranged in a shaft, the wiring being dedicated to transfer the electrical energy from the coupling station residing in a hall to the hoisting machine.

12. A method for an elevator system to transfer electrical energy, the elevator system comprising:
an elevator entity (120), and
a mobile robot (110),
the method comprises:
detecting (210) that the mobile robot (110) shall provide electrical energy to the elevator entity (120),
generating an instruction (220) for the mobile robot (110) to provide electrical energy to the elevator entity (120),
coupling (230) the mobile robot (110) to a coupling station of the elevator entity (120), and
providing electrical energy (240) to the elevator entity (120) via the coupling station of the elevator entity (120).
